(19) **Europäisches Patentamt European Patent Office Office européen des brevets**

(11) **EP 4 481 219 B1**

(12) **EUROPEAN PATENT SPECIFICATION**

(45) Date of publication and mention
of the grant of the patent:
**04.03.2026 Bulletin 2026/10**

(21) Application number: **23275093.5**

(22) Date of filing: **22.06.2023**

(51) International Patent Classification (IPC):
**F16C 35/067** (2006.01)      **F16C 35/07** (2006.01)

(52) Cooperative Patent Classification (CPC):
**F16C 35/067; F16C 35/07;** F16C 2226/60;
F16C 2229/00

(54) **LOCKING DIFFERENTIAL THREAD**

DIFFERENTIALSPERRGEWINDE

FILETAGE DIFFÉRENTIEL À BLOCAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.12.2024 Bulletin 2024/52**

(73) Proprietor: **Goodrich Actuation Systems Limited
Wolverhampton, West Midlands WV10 7EH (GB)**

(72) Inventors:
• **BENNETT, Cameron Joshua
Wolverhampton (GB)**
• **TIMMS, Jack William
Wolverhampton (GB)**

(74) Representative: **Dehns
10 Old Bailey
London EC4M 7NG (GB)**

(56) References cited:
**US-A- 4 657 412      US-A1- 2010 329 776**

# EP 4 481 219 B1

**Description**

TECHNICAL FIELD

The present invention relates to systems and methods of preloading components. The preloading may be axial preloading and may be achieved through one or more threaded elements. The preloading may also involve relative locking between the threaded elements to maintain a desired preload.

BACKGROUND

In modern engineering applications, it is often desirable to preload components with a high degree of accuracy and precision to optimise their operation or to increase their longevity. For example, accurate axial preloading of a bearing assembly can increase its lifespan and eliminate the vibration and noise that results from specified clearance, manufacturing precision and wear.

Such a preloaded bearing assembly is described in the document US2010329776A1.

For applications where components may be subject to external interferences such as mechanical vibration, for example in aircraft, it is also important to provide the preloaded components with a locking feature capable of locking the component in its precisely preloaded state. The extra requirement to provide locking functionality presents challenges with the precision of preloading. For example, when applying an axial preload via two corresponding threaded elements and locking the elements to one another using corresponding keyways, the number of available locking positions, and therefore the number of possible preload values, is typically limited by the density of keyways on each element. Increasing the density of such keyways or other similar locking features to enable more precise preload locking typically requires very precisely manufactured components, which can be difficult and expensive to produce.

SUMMARY

A system for axially preloading a component is provided, comprising a housing and a component disposed radially internal to the housing. The housing comprises a threaded inner circumferential surface with a first thread pitch. The system further comprises an outer annulus radially inward of the housing comprising a threaded outer circumferential surface with a thread pitch substantially equal to the first thread pitch and a threaded inner circumferential surface with a second thread pitch. The system further comprises an inner annulus radially inward of the outer annulus comprising a threaded outer circumferential surface with a thread pitch substantially equal to the second thread pitch. The housing is provided with a first number of keyways disposed around its circumference. The outer annulus is provided with a second number of keyways disposed around its circumference. The inner annulus is provided with a third number of keyways disposed around its circumference. The outer annulus is configured to rotate with respect to the housing to enable alignment of a keyway provided in the outer annulus and a keyway in the housing. The inner annulus is configured to rotate with respect to the outer annulus to enable alignment of a keyway provided in the inner annulus and a keyway in the outer annulus. The inner annulus is configured to be translated axially towards the component upon rotation of the outer annulus when the inner annulus and the housing are rotationally locked to one another.

In some embodiments, the first thread pitch may be coarser than the second thread pitch.

The first thread pitch may be finer than the second thread pitch.

The first number of keyways in the housing may be equal to the third number of keyways in the inner annulus.

The second number of keyways in the outer annulus may be greater than the first number of keyways in the housing.

The second number of keyways in the outer annulus may be less than the first number of keyways in the housing.

The component may be a bearing assembly.

The system may further comprise a key configured to be simultaneously inserted into two or more of the keyways in the housing, outer annulus and inner annulus.

A method of preloading the component as previously described is also provided and comprises: rotationally coupling the outer annulus and the inner annulus, rotating the outer annulus and inner annulus together in a first direction with respect to the housing such that at least one of the outer annulus and inner annulus are brought into axial abutment or near axial abutment with the component, rotating the outer annulus and inner annulus together in a second direction, opposite the first direction, until keyways in each of the housing, outer annulus and inner annulus are aligned with one another, rotationally uncoupling the outer annulus from the inner annulus, rotationally coupling the inner annulus with the housing, and rotating the outer annulus with respect to the housing and inner annulus such that the inner annulus is brought into axial abutment with, and axially compresses, the component.

The first pitch may be finer than the second pitch and, in this case, in the step of rotating the outer annulus with respect to the housing and inner annulus, the outer annulus may be rotated in the second direction.

The first pitch may be coarser than the second pitch, and in this case, in the step of rotating the outer annulus with respect to the housing and inner annulus, the outer annulus may be rotated in the first direction.

Another system for axially preloading a component is provided and comprises an inner housing and a component disposed radially external to the inner housing. The inner housing comprises a threaded outer circumferential surface with a first thread pitch. The system further comprises an inner annulus radially outward of the inner housing comprising a threaded inner circumferential surface with a thread pitch substantially equal to the first thread pitch and a threaded outer circumferential surface with a second thread pitch. The system further comprises an outer annulus radially outward of the inner annulus comprising a threaded inner circumferential surface with a thread pitch substantially equal to the second thread pitch. The inner housing is provided with a first number of keyways disposed around its circumference. The inner annulus is provided with a second number of keyways disposed around its circumference. The outer annulus is provided with a third number of keyways disposed around its circumference. The inner annulus is configured to rotate with respect to the inner housing to enable alignment of a keyway provided in the inner annulus and a keyway in the inner housing. The outer annulus is configured to rotate with respect to the inner annulus to enable alignment of a keyway provided in the outer annulus and a keyway in the inner annulus. The outer annulus is configured to be translated axially towards the component upon rotation of the inner annulus when the outer annulus and the inner housing are rotationally locked to one another.

A method of preloading a component as defined in the previous paragraph is also provided, comprising: rotationally coupling the inner annulus and the outer annulus, rotating the inner annulus and the outer annulus together in a first direction with respect to the inner housing such that at least one of the inner annulus and the outer annulus are brought into axial abutment or near axial abutment with the component, rotating the inner annulus and the outer annulus together in a second direction, opposite the first direction, until keyways in each of the inner housing, inner annulus and outer annulus are aligned with one another, rotationally uncoupling the inner annulus from the outer annulus, rotationally coupling the outer annulus with the inner housing, and rotating the inner annulus with respect to the inner housing and outer annulus such that the outer annulus is brought into axial abutment with, and axially compresses, the component.

In this method, the first pitch may be finer than the second pitch and, in this case, in the step of rotating the inner annulus with respect to the inner housing and outer annulus, the inner annulus may be rotated in the second direction.

The first pitch may alternatively be coarser than the second pitch, and in this case, in the step of rotating the inner annulus with respect to the inner housing and outer annulus, the inner annulus may be rotated in the first direction.

BRIEF DESCRIPTION OF THE DRAWINGS

The figures show selected embodiments of the method and system described herein. It will however be appreciated that the disclosure is not limited to any of the embodiments illustrated in the figures and that the scope of protection is defined by the claims.

Figure 1A illustrates a known system for preloading a component, viewed from above.
Figure 1B illustrates a cross-section side-view of a known system for preloading a component.
Figure 2A illustrates a system for preloading a component according to the present disclosure, viewed from above.
Figure 2B illustrates a system for preloading a component according to the present disclosure, in a perspective view.
Figure 2C illustrates a cross-section system for preloading a component according to the present disclosure, viewed from the side.
Figure 3A illustrates a view from above and a cross-section side-view of a first step of operation of a system of the present disclosure.
Figure 3B illustrates a view from above and a cross-section side-view of a second step of operation of a system of the present disclosure.
Figure 3C illustrates a view from above and a cross-section side-view of a third step of operation of a system of the present disclosure.
Figure 4 illustrates a perspective cross-section view of a bearing assembly incorporating the system for preloading of the present disclosure.
Figure 5A illustrates a cross-section side-view of an alternative system for preloading a component according to the present disclosure.
Figure 5B illustrates a view from above of the system shown in Figure 5A.

DETAILED DESCRIPTION

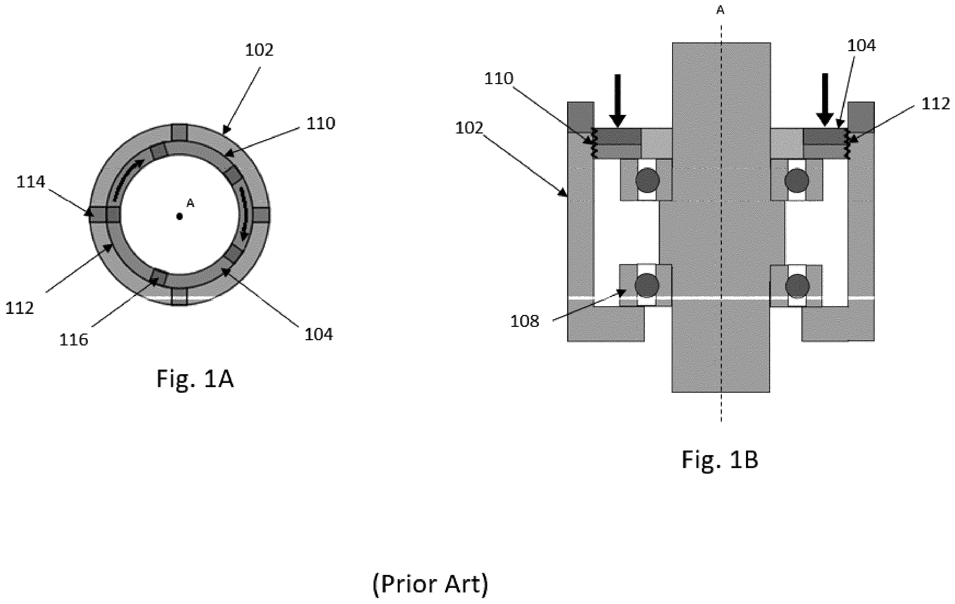

Figures 1A and 1B illustrate a known system for axially preloading a component 108. The system comprises a component 108, a housing 102 and an annulus 104. Figure 1A is a view of the system from above, whilst Figure 1B is a cross-section of the system viewed from the side. The axis, or axial direction, is represented by the line A, which is perpendicular to the page in Figure 1A. As shown in Figure 1B, the housing 102 radially surrounds the component 108 and is in axial abutment with the component 108 at one axial end. As viewed from Figure 1A, the housing 102 comprises a substantially circular inner circumferential surface 110. The inner surface 110 comprises a thread. The annulus 104 comprises a substantially circular outer circumferential surface 112, when viewed from Figure 1A, which also comprises a thread. The outer circumferential surface 112 of the annulus 104 has substantially the same diameter as the inner circumferential surface 110 of the housing 102. The threads on the outer circumferential surface 112 of the annulus 104 and on the inner circumferential surface 110 of the housing 102 have substantially the same pitch and are configured to mate with one another such that the annulus 104 can be brought into a threaded engagement with the housing 102.

As shown in Figure 1A, the housing 102 comprises a number Na of housing keyways 114 disposed at an axial end thereof. The housing keyways 114 are disposed around the circumference of the housing 102. The housing keyways 114 have an axial depth and extend radially from the inner circumferential surface 110 of the housing 102. Similarly, the annulus 104 comprises a number Nb of annulus keyways 116 disposed at an axial end thereof. The annulus keyways 116 have an axial depth and extend radially from the outer circumferential surface 112 of the annulus 104. The housing keyways 114 and annulus keyways 116 are configured such that a key (not shown) can be placed simultaneously in a housing keyway 114 and an annulus keyway 116, when each are aligned with one another, to prevent relative rotation between the housing 102 and the annulus 104.

The threads on the inner circumferential surface 110 of the housing 102 and the outer circumferential surface 112 of the annulus 104 are configured such that when the annulus 104 is rotated around the axis A relative to the housing 102, the annulus 104 travels axially with respect to the housing 102. Figures 1A and 1B are provided with arrows to illustrate this. In this example, a clockwise rotation of the annulus 104, when viewed from above, results in a downward relative axial movement of the annulus 104 with respect to the housing 102, when viewed from Figure 1B. As will be appreciated, due to the axial abutment of the annulus 104 with the component 108, and the axial abutment of the housing 102 with the component 108 at an opposite axial end, this downward axial movement of the annulus 104 will result in axial compression, or preloading, of the component 108. An example of a component 108 to be axially preloaded is a bearing assembly. One disadvantage of this system is that, in order to axially compress the component 108, the annulus 104 must continue to be rotated even after being bought into abutment with the component 108. The friction between these two parts during such compression can prematurely wear both parts, reducing their longevity.

As can be appreciated, the precision of preloading of the component 108 is limited by the number Na of housing keyways and the number Nb of annulus keyways, since these determine the number of available locking positions per turn of the annulus 104, i.e. per unit of axial displacement of the annulus 104. The achievable precision of this system can be determined using the following equation:

$$Achievable\ precision = \frac{P}{\text{lcm}(N_a, N_b)} \qquad (1)$$

Where P is the pitch of the thread disposed on the inner circumferential surface 110 of the housing 102 and the outer circumferential surface 112 of the annulus 104. Here, the "achievable precision" is equivalent to the smallest axial displacement of the annulus 104 between possible locking positions with the housing 102. The smaller the value of the "achievable precision", the more precise the preload can be. The function lcm(Na, Nb) represents the lowest common multiple of Na and Nb. From this equation, it can be seen that increasing the number of keyways present in the housing 102 and/or the annulus 104 enables more precise preloading. However, due to the relatively small dimensions of components 108 and their housings 102 in some applications, increasing the number of keyways can present manufacturing and operational hurdles. For example, as the number of keyways increases, the size of the keyways eventually decreases to a point where expensive precision engineering is required to manufacture the housing 102 and/or annulus 104, placing limits on the achievable precision of the system. In addition, the more, and therefore the smaller, the keyways, the more difficult the operation thereof is, due to the small parts involved. Another way in which the achievable precision may be improved is to reduce the pitch of the thread between the housing 102 and annulus 104. However, decreasing the thread pitch increases manufacturing burden and cost and eventually reaches manufacturing limits. Finer pitch threads are also more prone to damage (nicking), thread fouling and thread galling.

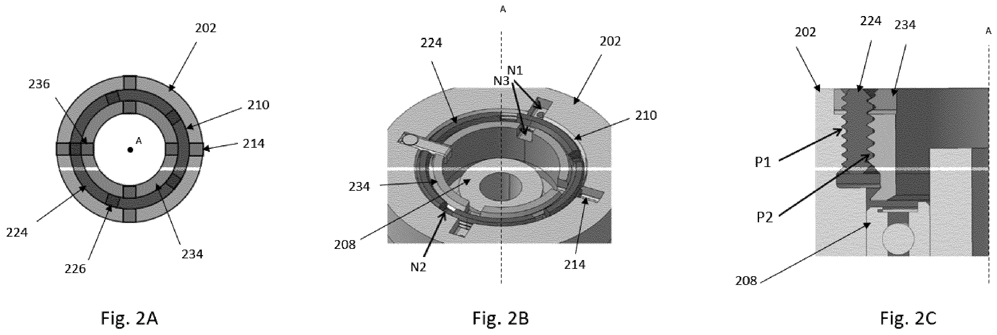

Figures 2A to 2C illustrate a system according to the present disclosure for axially preloading a component 208 which addresses the problems presented by the aforementioned preloading system. Figure 2A illustrates a housing 202, similar to the housing 102 shown in Figures 1A and 1B. Like the housing 102, the housing 202 has a substantially circular, when viewed from above, inner circumferential surface 210, which is threaded. The housing 202 radially surrounds a component 208 (shown in Figures 2B and 2C). The system is provided with two threaded annuli, an outer annulus 224 and an inner annulus 234. Each annulus has an inner and an outer circumferential surface, the inner circumferential surface being defined as the circumferential surface at a smaller radius (closer to the axis A) than the outer circumferential surface. The housing 202 has a number N1 of housing keyways 214 disposed around its circumference. The housing keyways 214 have an axial depth and extend radially from the inner circumferential surface 210 of the housing 202. The outer annulus 224 comprises a number N2 of outer annulus keyways 226. The outer annulus keyways 226 have an axial depth and extend radially from the inner circumferential surface of the outer annulus 224 to the outer circumferential surface of the outer annulus 224. The inner annulus 234 comprises a number N3 of inner annulus keyways 236. The number N3 of inner annulus keyways 236 may be greater than, less than, or equal to the number of housing keyways 214. The inner annulus keyways 236 have an axial depth and extend radially from the outer circumferential surface of the inner annulus 234.

As illustrated in Figure 2C, the outer annulus 224 is provided with threads on both its inner and outer circumferential surfaces. The thread on the outer circumferential surface of the outer annulus 224 has a first pitch P1, whereas the thread on the inner circumferential surface of the outer annulus 224 has a second pitch P2. The thread on the inner circumferential surface 210 of the housing 202 also has first pitch P1. The thread on the outer circumferential surface of the outer annulus 224, having substantially the same pitch as the inner circumferential surface 210 of the housing 202, is configured to engage with the thread on the housing 202. The outer annulus 224 is therefore, through threaded engagement, configured to be translated axially with respect to the housing 202 upon relative rotation therebetween. The outer annulus 224 also comprises a thread on its inner circumferential surface, as also shown in Figure 2C. This thread has a second pitch P2, which may be coarser, i.e. greater than the first pitch P1. In some embodiments, however, the first pitch P1 may be coarser than the second pitch P2. Pitch is defined in the present disclosure as the axial distance between neighbouring threads. This means that a coarser pitch has fewer threads per axial distance and the distance between threads is greater. A finer pitch has more threads per axial distance and the distance between the threads is smaller. The thread on the inner circumferential surface of the outer annulus 224 is configured to engage with a thread disposed on the outer circumferential surface of the inner anulus 234, which has a pitch substantially equal to the second pitch P2. The outer annulus 224 is therefore, through engagement of its inner circumference thread with the thread on the outer circumference of the inner annulus 234, configured to be translated axially with respect to the inner annulus 234 upon relative rotation therebetween. Said another way, the inner annulus 234 is configured to be translated axially with respect to the outer annulus 224 upon relative rotation therebetween.

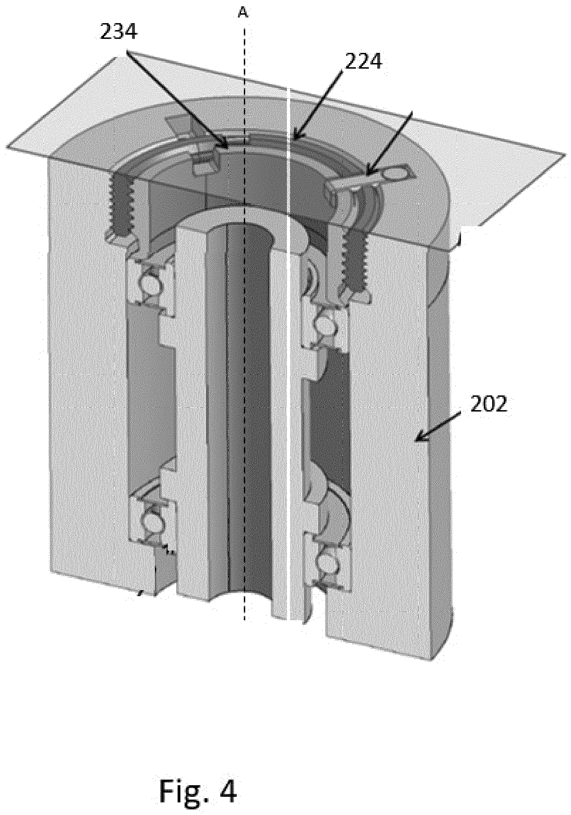

The addition of an extra annulus, in this case the inner annulus 234, with a thread with a different pitch to that between the outer annulus 224 and the housing 202, allows finer tuning of the preload on the component 208. Using the keyways on each annulus and the housing 202, the preload applied to the component 208 may be locked at a greater number of different values, therefore allowing for a more precise locked preload, i.e. a higher locking resolution. The achievable precision for the system shown in Figures 2A to 2C, 3 and 4 can be expressed using the following equation:

$$Achievable\ precision = \frac{|P1 - P2|}{\text{lcm}(N_2, \min(N_1, N_3))} \qquad (2)$$

Where |P1-P2| is the magnitude of the difference between thread pitches P1 and P2, the function min(N1, N3) is equal to the smaller number of N1 or N3, and the lcm(N2, min(N1, N3)) function is equal to the lowest common multiple of N2 and min(N1, N3). As can be seen from this equation, choosing an appropriate value for the thread pitch P2, can result in a greatly improved achievable precision as compared with the embodiment shown in Figures 1A and 1B, to which equation (1) applies. In general, the smaller the difference between P1 and P2, the more precise the preload can be. In other words, the locking resolution is increased. Additionally, increasing the number of keyways also allows for more precise preload and greater locking resolution.

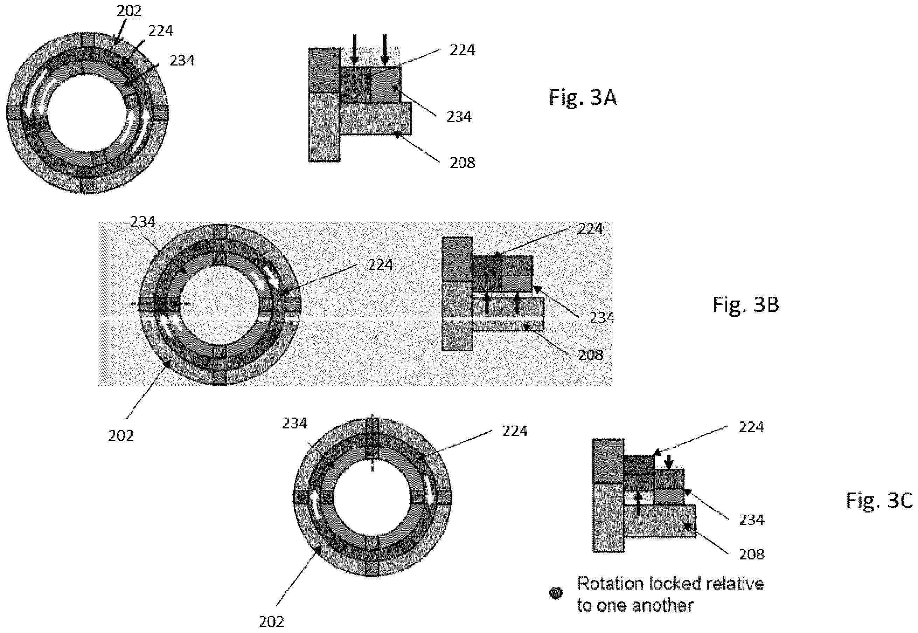

Figures 3A to 3C illustrate a method of precisely applying and locking preload to the component 208 using the system shown in in Figures 2A to 2C. Firstly, as shown in Figure 3A, the inner and outer annuli 234, 224 are rotationally coupled, or locked, with respect one another, via a key inserted simultaneously in keyways of both annuli, or by other means. Both annuli are then rotated in a first direction with respect to the housing 202 such that at least one of the annuli is brought into axial abutment, or near axial abutment, with the component 208. Next, as illustrated in Figure 3B, the annuli are rotated in an opposite second direction until a rotational position is reached where keyways on each of the housing 202, inner annulus 234 and outer annulus 224 are aligned. As shown on the right hand side of Figure 3B, both annuli translated axially away from the component 208 during this step. Next, as shown in Figure 3C, the inner and outer annuli 234, 224 are rotationally uncoupled, or unlocked, from one another. The inner annulus 234 is then instead rotationally coupled to the housing 202, via a key inserted into respective keyways in each part, or otherwise.

In the case where the first pitch P1 is finer than the second pitch P2, the outer annulus 224 is then rotated in the second direction with respect to the housing 202 and the inner annulus 234. This results in further axial movement of the outer annulus 224 away from the component 208. However, due to the difference in pitch of the threads between the housing 202 and the outer annulus 224 and between the inner annulus 234 and outer annulus 224, for each turn of the outer annulus 224 and subsequent unit distance of axial translation thereof away from the component 208, the inner annulus 234 is translated towards the component 208 by a relatively smaller axial distance.

In the case where the first pitch P1 is coarser than the second pitch P2, instead of rotating the outer annulus 224 in the second direction, the outer annulus 224 is rotated in the first direction (this step is not shown in the figures). This results in axial movement of the outer annulus 224 towards the component 208. During this step, the inner annulus 234 is also translated axially towards the component 208. Due to the difference in thread pitches P1 and P2, for each turn of the outer annulus 224 and subsequent unit distance of axial translation thereof towards the component 208, the inner annulus 234 is translated axially towards the component 208 by a relatively smaller axial distance.

After the inner annulus 234 has reached axial abutment with the component 208, further rotation of the outer annulus 224 in the second or first direction, depending on the relative pitches as described above, results in compression, or preloading, of the component 208. Once a desired preload of the component 208 is reached, the outer annulus 224 can be rotated to the closest rotational position thereof in which keyways in each of the housing 202, outer annulus 224 and inner annulus 234 align circumferentially. The preload of the system can then be locked by inserting a key simultaneously through the keyways in each part, which prevents further rotation of each part with respect to either other part. One further advantage of this system and method is that the inner annulus 234, which is responsible for applying axial preload to the component 208, does not rotate with respect to the component 208 when the axial preload is being applied. This prevents unwanted friction and resulting wear between these parts and therefore increases their longevity.

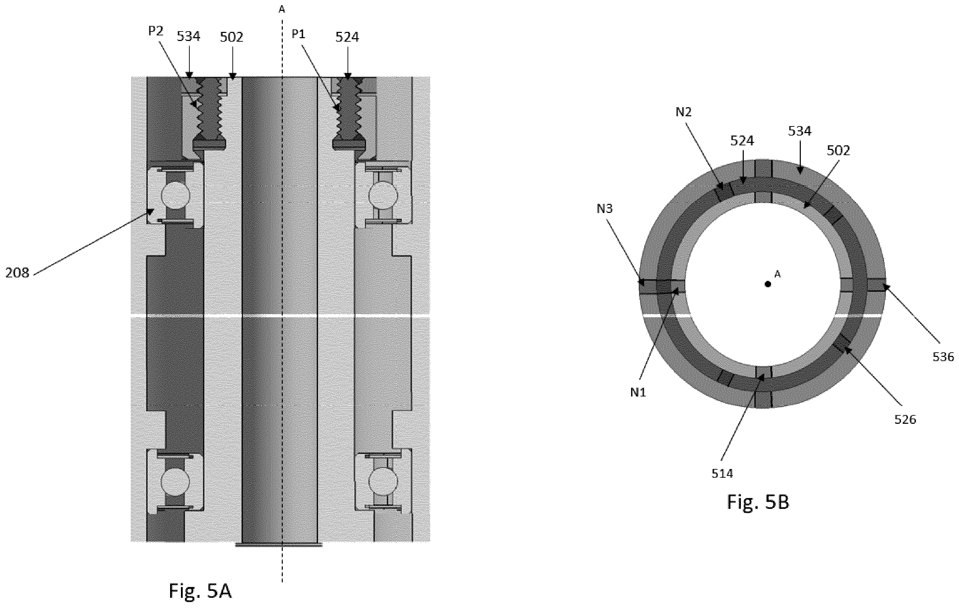

In some embodiments, the housing 202 axially abuts the component 208 at an axial end opposite to the annuli, enabling compression of the component 208 through the above-described operation of the annuli. However, it is also anticipated that the housing 202 and annulus structure as herein described, either in relation to Figures 2A to 4 or in Figures 5A and 5B, may be replicated at both axial ends of the component 208. This may provide further improved locking resolution through an increased number of combined locking positions between the structure at one axial end and the structure at the other axial end.

Although the abovementioned embodiments have been described with the housing 202 radially surrounding the component 208, the inner annulus 234 and the outer annulus 224, it is also envisaged that the housing 202 can instead be disposed radially inwards of the component 208.

Figure 5A illustrates an alternative embodiment of a system for preloading a component 208. This system functions on the same principles as the system illustrates in Figures 2A to 4. However, in this embodiment, instead of a radially external housing 202 being provided with an internal thread to serve as an axial anchor point for the annuli, the system is provided with an internal housing 502. As shown in the figure, the radially internal housing 502 forms a generally cylindrical shape, which may be concentric with the axis A. The radially inner housing comprises a thread on its radially outer surface with pitch P1. Also provided is an inner annulus 524. The inner annulus is provided with a thread with pitch P1 on its inner circumferential surface. The inner annulus 524 is also provided with a thread of pitch P2 on its outer circumferential surface. An outer annulus 534 is also provided, with a thread on its inner circumferential surface having pitch P2. The outer annulus 534 is configured to be radially aligned with the component 208 when the annuli 524, 534 are positioned as shown in Figure 5A. This means that the outer annulus 534 is configured to axially abut the component 208 when translated a sufficient axial distance towards the component 208.

As shown in Figure 5B, the housing 502 has a number N1 of housing keyways 514 disposed around its circumference. The housing keyways 514 have an axial depth and extend radially from the outer circumferential surface of the housing 502. The inner annulus 524 comprises a number N2 of outer annulus keyways 526. The inner annulus keyways 526 have an axial depth and extend radially from the inner circumferential surface of the inner annulus 524 to the outer circumferential surface of the inner annulus 524. The outer annulus 534 comprises a number N3 of outer annulus keyways 536. The number N3 of outer annulus keyways 536 may be greater than, less than, or equal to the number of housing keyways 214. The outer annulus keyways 536 have an axial depth and extend radially from the inner circumferential surface of the outer annulus 534. The achievable precision using the system as shown in Figures 5A and 5B can be described using equation (2).

The system as illustrated in Figures 5A and 5B can be operated in much the same way as that shown in Figures 2A to 4. One or more examples of a method of operating the system shown in Figures 5A and 5B will now be described.

Firstly, the inner and outer annuli 524, 534 are rotationally coupled, or locked, with respect one another, via a key inserted simultaneously in keyways of both annuli, or by other means. Both annuli are then rotated in a first direction with respect to the radially internal housing 502 such that at least one of the annuli is brought into axial abutment, or near axial abutment, with the component 208. Next, the annuli are rotated in an opposite second direction until a rotational position is reached where keyways on each of the radially internal housing 502, inner annulus 524 and outer annulus 534 are aligned. Both annuli translated axially away from the component 208 during this step. Next, the inner and outer annuli 524, 534 are rotationally uncoupled, or unlocked, from one another. The outer annulus 534 is then instead rotationally coupled to the radially internal housing 502, via a key inserted into respective keyways in each part, or otherwise.

In the case where the first pitch P1 is finer than the second pitch P2, the inner annulus 524 is then rotated in the second direction with respect to the radially internal housing 502 and the outer annulus 534. This results in further axial movement of the inner annulus 524 away from the component 208. However, due to the difference in pitch of the threads between the radially internal housing 502 and the inner annulus 524 and between the outer annulus 534 and inner annulus 524, for each turn of the inner annulus 524 and subsequent unit distance of axial translation thereof away from the component 208, the outer annulus 534 is translated towards the component 208 by a relatively smaller axial distance.

In the case where the first pitch P1 is coarser than the second pitch P2, instead of rotating the inner annulus 524 in the second direction, the inner annulus 524 is rotated in the first direction. This results in axial movement of the inner annulus 524 towards the component 208. During this step, the outer annulus 534 is also translated axially towards the component 208. Due to the difference in thread pitches P1 and P2, for each turn of the inner annulus 524 and subsequent unit distance of axial translation thereof towards the component 208, the outer annulus 534 is translated axially towards the component 208 by a relatively smaller axial distance.

After the outer annulus 534 has reached axial abutment with the component 208, further rotation of the inner annulus 524 in the second or first direction, depending on the relative pitches as described above, results in compression, or preloading, of the component 208. Once a desired preload of the component 208 is reached, the inner annulus 524 can be rotated to the closest rotational position thereof in which keyways in each of the radially internal housing 502, outer annulus 534 and inner annulus 524 align circumferentially. The preload of the system can then be locked by inserting a key simultaneously through the keyways in each part, which prevents further rotation of each part with respect to either other part. One advantage of this system and method is that the outer annulus 534, which is responsible for applying axial preload to the component 208, does not rotate with respect to the component 208 when the axial preload is being applied. This prevents unwanted friction and resulting wear between these parts and therefore increases their longevity.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1.  A system for axially preloading a component, comprising:

    a housing (202);
    a component (208) disposed radially internal to the housing (202);
    wherein the housing (202) comprises a threaded inner circumferential surface (210) with a first thread pitch (P1);
    an outer annulus (224) radially inward of the housing (202), comprising a threaded outer circumferential surface with a thread pitch substantially equal to the first thread pitch (P1) and a threaded inner circumferential surface with a second thread pitch (P2);
    an inner annulus (234) radially inward of the outer annulus (224), comprising a threaded outer circumferential surface with a thread pitch substantially equal to the second thread pitch (P2);
    wherein the housing (202) is provided with a first number (N1) of keyways disposed around its circumference;
    wherein the outer annulus (224) is provided with a second number (N2) of keyways disposed around its circumference;
    wherein the inner annulus is provided with a third number (N3) of keyways disposed around its circumference;
    wherein the outer annulus (224) is configured to rotate with respect to the housing (202) to enable alignment of a keyway provided in the outer annulus (224) and a keyway in the housing (202);
    wherein the inner annulus (234) is configured to rotate with respect to the outer annulus (224) to enable alignment of a keyway provided in the inner annulus (234) and a keyway in the outer annulus (224);
    wherein the inner annulus (234) is configured to be translated axially towards the component (208) upon rotation of the outer annulus (224) when the inner annulus (234) and the housing (202) are rotationally locked to one another.

2.  The system of claim 1, wherein the first thread pitch is coarser than the second thread pitch.

3.  The system of claim 1, wherein the first thread pitch is finer than the second thread pitch.

4.  The system of any preceding claim, wherein the first number (N1) of keyways in the housing (202) is equal to the third number (N3) of keyways in the inner annulus (234).

5.  The system of any preceding claim, wherein the second number (N2) of keyways in the outer annulus (224) is greater than the first number of keyways (N1) in the housing (202).

6.  The system of any preceding claim, wherein the second number (N2) of keyways in the outer annulus (224) is less than the first number of keyways (N1) in the housing (202).

7. The system of any preceding claim, wherein the component (208) is a bearing assembly.

8. The system of any preceding claim, further comprising a key configured to be simultaneously inserted into two or more of the keyways in the housing (202), outer annulus (224) and inner annulus (234).

9. A method of preloading a component as defined in any preceding claim, comprising:

   rotationally coupling the outer annulus (224) and the inner annulus (234);
   rotating the outer annulus (224) and inner annulus (234) together in a first direction with respect to the housing (202) such that at least one of the outer annulus (224) and inner annulus (234) are brought into axial abutment or near axial abutment with the component (208);
   rotating the outer annulus (224) and inner annulus (234) together in a second direction, opposite the first direction, until keyways in each of the housing (202), outer annulus (224) and inner annulus (234) are aligned with one another;
   rotationally uncoupling the outer annulus (224) from the inner annulus (234);
   rotationally coupling the inner annulus (234) with the housing (202);
   rotating the outer annulus (224) with respect to the housing (202) and inner annulus (234) such that the inner annulus (234) is brought into axial abutment with, and axially compresses, the component (208).

10. The method of claim 9, wherein the first pitch (P1) is finer than the second pitch (P2) and in the step of rotating the outer annulus (224) with respect to the housing (202) and inner annulus (234), the outer annulus (224) is rotated in the second direction.

11. The method of claim 9, wherein the first pitch (P1) is coarser than the second pitch (P2), in the step of rotating the outer annulus (224) with respect to the housing (202) and inner annulus (234), the outer annulus (224) is rotated in the first direction.

12. A system for axially preloading a component, comprising:

   an inner housing (502);
   a component (208) disposed radially external to the inner housing (502);
   wherein the inner housing (502) comprises a threaded outer circumferential surface with a first thread pitch (P1);
   an inner annulus (524) radially outward of the inner housing (502), comprising a threaded inner circumferential surface with a thread pitch substantially equal to the first thread pitch (P1) and a threaded outer circumferential surface with a second thread pitch (P2);
   an outer annulus (534) radially outward of the inner annulus (524), comprising a threaded inner circumferential surface with a thread pitch substantially equal to the second thread pitch (P2);
   wherein the inner housing (502) is provided with a first number (N1) of keyways disposed around its circumference;
   wherein the inner annulus (524) is provided with a second number (N2) of keyways disposed around its circumference;
   wherein the outer annulus (534) is provided with a third number (N3) of keyways disposed around its circumference;
   wherein the inner annulus (524) is configured to rotate with respect to the inner housing (502) to enable alignment of a keyway provided in the inner annulus (524) and a keyway in the inner housing (502);
   wherein the outer annulus (534) is configured to rotate with respect to the inner annulus (524) to enable alignment of a keyway provided in the outer annulus (534) and a keyway in the inner annulus (524);
   wherein the outer annulus (534) is configured to be translated axially towards the component (208) upon rotation of the inner annulus (524) when the outer annulus (534) and the inner housing (502) are rotationally locked to one another.

13. A method of preloading a component as defined in claim 12, comprising:

   rotationally coupling the inner annulus (524) and the outer annulus (534);
   rotating the inner annulus (524) and the outer annulus (534) together in a first direction with respect to the inner housing (502) such that at least one of the inner annulus (524) and the outer annulus (534) are brought into axial abutment or near axial abutment with the component (208);
   rotating the inner annulus (524) and the outer annulus (534) together in a second direction, opposite the first direction, until keyways in each of the inner housing (502), inner annulus (524) and outer annulus (534) are aligned with one another;

rotationally uncoupling the inner annulus (524) from the outer annulus (534);

rotationally coupling the outer annulus (534) with the inner housing (502);

rotating the inner annulus (524) with respect to the inner housing (502) and outer annulus (534) such that the outer annulus (534) is brought into axial abutment with, and axially compresses, the component (208).

14. The method of claim 13, wherein the first pitch (P1) is finer than the second pitch (P2) and in the step of rotating the inner annulus (524) with respect to the inner housing (502) and outer annulus (534), the inner annulus (524) is rotated in the second direction.

15. The method of claim 13, wherein the first pitch (P1) is coarser than the second pitch (P2), in the step of rotating the inner annulus (524) with respect to the inner housing (502) and outer annulus (534), the inner annulus (524) is rotated in the first direction.

## Patentansprüche

1. System zum axialen Vorspannen einer Komponente, umfassend:

ein Gehäuse (202);

eine Komponente (208), die radial innerhalb des Gehäuses (202) angeordnet ist;

wobei das Gehäuse (202) eine mit Gewinde versehene innere Umfangsoberfläche (210) mit einer ersten Gewindesteigung (P1) umfasst;

einen äußeren Ring (224) radial innen zu dem Gehäuse (202), umfassend eine mit Gewinde versehene äußere Umfangsoberfläche mit einer Gewindesteigung, die im Wesentlichen gleich der ersten Gewindesteigung (P1) ist, und eine mit Gewinde versehene innere Umfangsoberfläche mit einer zweiten Gewindesteigung (P2);

einen inneren Ring (234) radial innen zu dem äußeren Ring (224), umfassend eine mit Gewinde versehene äußere Umfangsoberfläche mit einer Gewindesteigung, die im Wesentlichen gleich der zweiten Gewindesteigung (P2) ist;

wobei das Gehäuse (202) mit einer ersten Anzahl (N1) von Keilnuten versehen ist, die um seinen Umfang angeordnet sind;

wobei der äußere Ring (224) mit einer zweiten Anzahl (N2) von Keilnuten versehen ist, die um seinen Umfang angeordnet sind;

wobei der innere Ring mit einer dritten Anzahl (N3) von Keilnuten versehen ist, die um seinen Umfang angeordnet sind;

wobei der äußere Ring (224) konfiguriert ist, um sich in Bezug auf das Gehäuse (202) zu drehen, um Ausrichtung einer in dem äußeren Ring (224) bereitgestellten Keilnut und einer Keilnut in dem Gehäuse (202) zu ermöglichen;

wobei der innere Ring (234) konfiguriert ist, um sich in Bezug auf den äußeren Ring (224) zu drehen, um Ausrichtung einer in dem inneren Ring (234) bereitgestellten Keilnut und einer Keilnut in dem äußeren Ring (224) zu ermöglichen;

wobei der innere Ring (234) konfiguriert ist, um bei Rotation des äußeren Rings (224) axial zu der Komponente (208) hin verschoben zu werden, wenn der innere Ring (234) und das Gehäuse (202) drehfest miteinander verriegelt sind.

2. System nach Anspruch 1, wobei die erste Gewindesteigung grober ist als die zweite Gewindesteigung.

3. System nach Anspruch 1, wobei die erste Gewindesteigung feiner ist als die zweite Gewindesteigung.

4. System nach einem der vorhergehenden Ansprüche, wobei die erste Anzahl (N1) von Keilnuten in dem Gehäuse (202) gleich der dritten Anzahl (N3) von Keilnuten in dem inneren Ring (234) ist.

5. System nach einem der vorhergehenden Ansprüche, wobei die zweite Anzahl (N2) von Keilnuten in dem äußeren Ring (224) größer ist als die erste Anzahl von Keilnuten (N1) in dem Gehäuse (202).

6. System nach einem der vorhergehenden Ansprüche, wobei die zweite Anzahl (N2) von Keilnuten in dem äußeren Ring (224) kleiner ist als die erste Anzahl von Keilnuten (N1) in dem Gehäuse (202).

**7.** System nach einem der vorhergehenden Ansprüche, wobei die Komponente (208) eine Lageranordnung ist.

**8.** System nach einem der vorhergehenden Ansprüche, das ferner einen Keil umfasst, der konfiguriert ist, um gleichzeitig in zwei oder mehr der Keilnuten in dem Gehäuse (202), dem äußeren Ring (224) und dem inneren Ring (234) eingeführt zu werden.

**9.** Verfahren zum Vorspannen einer Komponente, wie in einem der vorhergehenden Ansprüche definiert, umfassend:

rotatorisches Koppeln des äußeren Rings (224) und des inneren Rings (234);
Drehen des äußeren Rings (224) und des inneren Rings (234) zusammen in eine erste Richtung in Bezug auf das Gehäuse (202), sodass wenigstens einer von dem äußeren Ring (224) und dem inneren Ring (234) in axiale Anlage oder nahe axiale Anlage mit der Komponente (208) gebracht wird;
Drehen des äußeren Rings (224) und des inneren Rings (234) zusammen in eine zweite Richtung, entgegengesetzt zu der ersten Richtung, bis Keilnuten in jedem von dem Gehäuse (202), dem äußeren Ring (224) und dem inneren Ring (234) miteinander ausgerichtet sind;
rotatorisches Entkoppeln des äußeren Rings (224) von dem inneren Ring (234);
rotatorisches Koppeln des inneren Rings (234) mit dem Gehäuse (202) ;
Drehen des äußeren Rings (224) in Bezug auf das Gehäuse (202) und den inneren Ring (234), sodass der innere Ring (234) in axiale Anlage mit der Komponente (208) gebracht wird und diese axial komprimiert.

**10.** Verfahren nach Anspruch 9, wobei die erste Steigung (P1) feiner ist als die zweite Steigung (P2) und in dem Schritt des Drehens des äußeren Rings (224) in Bezug auf das Gehäuse (202) und den inneren Ring (234) der äußere Ring (224) in die zweite Richtung gedreht wird.

**11.** Verfahren nach Anspruch 9, wobei die erste Steigung (P1) grober ist als die zweite Steigung (P2), wobei in dem Schritt des Drehens des äußeren Rings (224) in Bezug auf das Gehäuse (202) und den inneren Ring (234) der äußere Ring (224) in die erste Richtung gedreht wird.

**12.** System zum axialen Vorspannen einer Komponente, umfassend:

ein inneres Gehäuse (502);
eine Komponente (208), die radial außerhalb des inneren Gehäuses (502) angeordnet ist;
wobei das innere Gehäuse (502) eine mit Gewinde versehene äußere Umfangsoberfläche mit einer ersten Gewindesteigung (P1) umfasst;
einen inneren Ring (524) radial außen zu dem inneren Gehäuse (502), umfassend eine mit Gewinde versehene innere Umfangsoberfläche mit einer Gewindesteigung, die im Wesentlichen gleich der ersten Gewindesteigung (P1) ist, und eine mit Gewinde versehene äußere Umfangsoberfläche mit einer zweiten Gewindesteigung (P2);
einen äußeren Ring (534) radial außen zu dem inneren Ring (524), umfassend eine mit Gewinde versehene innere Umfangsoberfläche mit einer Gewindesteigung, die im Wesentlichen gleich der zweiten Gewindesteigung (P2) ist;
wobei das inneres Gehäuse (502) mit einer ersten Anzahl (N1) von Keilnuten versehen ist, die um seinen Umfang angeordnet sind;
wobei der innere Ring (524) mit einer zweiten Anzahl (N2) von Keilnuten versehen ist, die um seinen Umfang angeordnet sind;
wobei der äußere Ring (534) mit einer dritten Anzahl (N3) von Keilnuten versehen ist, die um seinen Umfang angeordnet sind;
wobei der innere Ring (524) konfiguriert ist, um sich in Bezug auf das innere Gehäuse (502) zu drehen, um Ausrichtung einer in dem inneren Ring (524) bereitgestellten Keilnut und einer Keilnut in dem inneren Gehäuse (502) zu ermöglichen;
wobei der äußere Ring (534) konfiguriert ist, um sich in Bezug auf den inneren Ring (524) zu drehen, um Ausrichtung einer in dem äußeren Ring (534) bereitgestellten Keilnut und einer Keilnut in dem inneren Ring (524) zu ermöglichen;
wobei der äußere Ring (534) konfiguriert ist, um bei Rotation des inneren Rings (524) axial zu der Komponente (208) hin verschoben zu werden, wenn der äußere Ring (534) und das innere Gehäuse (502) drehfest miteinander verriegelt sind.

**13.** Verfahren zum Vorspannen einer Komponente, wie in Anspruch 12 definiert, umfassend:

rotatorisches Koppeln des inneren Rings (524) und des äußeren Rings (534);

Drehen des inneren Rings (524) und des äußeren Rings (534) zusammen in eine erste Richtung in Bezug auf das innere Gehäuse (502), sodass wenigstens einer von dem inneren Ring (524) und dem äußeren Ring (534) in axiale Anlage oder nahe axiale Anlage mit der Komponente (208) gebracht wird;

Drehen des inneren Rings (524) und des äußeren Rings (534) zusammen in eine zweite Richtung, entgegengesetzt zu der ersten Richtung, bis Keilnuten in jedem von dem inneren Gehäuse (502), dem inneren Ring (524) und dem äußeren Ring (534) miteinander ausgerichtet sind;

rotatorisches Entkoppeln des inneren Rings (524) von dem äußeren Ring (534);

rotatorisches Koppeln des äußeren Rings (534) mit dem inneren Gehäuse (502);

Drehen des inneren Rings (524) in Bezug auf das innere Gehäuse (502) und den äußeren Ring (534), sodass der äußere Ring (534) in axiale Anlage mit der Komponente (208) gebracht wird und diese axial komprimiert.

14. Verfahren nach Anspruch 13, wobei die erste Steigung (P1) feiner ist als die zweite Steigung (P2) und in dem Schritt des Drehens des inneren Rings (524) in Bezug auf das innere Gehäuse (502) und den äußeren Ring (534) der innere Ring (524) in die zweite Richtung gedreht wird.

15. Verfahren nach Anspruch 13, wobei die erste Steigung (P1) grober ist als die zweite Steigung (P2), wobei in dem Schritt des Drehens des inneren Rings (524) in Bezug auf das innere Gehäuse (502) und den äußeren Ring (534) der innere Ring (524) in die erste Richtung gedreht wird.

## Revendications

1. Système de précharge axiale d'un composant, comprenant :

   un boîtier (202) ;

   un composant (208) disposé radialement à l'intérieur du boîtier (202) ;

   dans lequel le boîtier (202) comprend une surface circonférentielle intérieure filetée (210) avec un premier pas de filetage (P1) ;

   un anneau extérieur (224) disposé radialement à l'intérieur du boîtier (202), comprenant une surface circonférentielle extérieure filetée avec un pas de filetage sensiblement égal au premier pas de filetage (P1) et une surface circonférentielle intérieure filetée avec un second pas de filetage (P2) ;

   un anneau intérieur (234) disposé radialement à l'intérieur de l'anneau extérieur (224), comprenant une surface circonférentielle extérieure filetée avec un pas de filetage sensiblement égal au second pas de filetage (P2) ;

   dans lequel le boîtier (202) comprend un premier nombre (N1) de rainures de clavette disposées autour de sa circonférence ;

   dans lequel l'anneau extérieur (224) comprend un deuxième nombre (N2) de rainures de clavette disposées autour de sa circonférence ;

   dans lequel l'anneau intérieur comprend un troisième nombre (N3) de rainures de clavette disposées autour de sa circonférence ;

   dans lequel l'anneau extérieur (224) est configuré pour tourner par rapport au boîtier (202) afin de permettre l'alignement d'une rainure de clavette ménagée dans l'anneau extérieur (224) et d'une rainure de clavette dans le boîtier (202) ;

   dans lequel l'anneau intérieur (234) est configuré pour tourner par rapport à l'anneau extérieur (224) afin de permettre l'alignement d'une rainure de clavette ménagée dans l'anneau intérieur (234) et d'une rainure de clavette dans l'anneau extérieur (224) ;

   dans lequel l'anneau intérieur (234) est configuré pour être déplacé axialement en translation vers le composant (208) lors de la rotation de l'anneau extérieur (224) lorsque l'anneau intérieur (234) et le boîtier (202) sont bloqués en rotation l'un par rapport à l'autre.

2. Système selon la revendication 1, dans lequel le premier pas de filetage est plus large que le second pas de filetage.

3. Système selon la revendication 1, dans lequel le premier pas de filetage est plus fin que le second pas de filetage.

4. Système selon une quelconque revendication précédente, dans lequel le premier nombre (N1) de rainures de clavette dans le boîtier (202) est égal au troisième nombre (N3) de rainures de clavette dans l'anneau intérieur (234).

5. Système selon une quelconque revendication précédente, dans lequel le deuxième nombre (N2) de rainures de clavette dans l'anneau extérieur (224) est supérieur au premier nombre de rainures de clavette (N1) dans le boîtier (202).

6. Système selon une quelconque revendication précédente, dans lequel le deuxième nombre (N2) de rainures de clavette dans l'anneau extérieur (224) est inférieur au premier nombre de rainures de clavette (N1) dans le boîtier (202).

7. Système selon une quelconque revendication précédente, dans lequel le composant (208) est un ensemble de support.

8. Système selon une quelconque revendication précédente, comprenant en outre une clavette configurée pour être insérée simultanément dans deux ou plusieurs des rainures de clavette du boîtier (202), de l'anneau extérieur (224) et de l'anneau intérieur (234).

9. Procédé de précharge d'un composant selon une quelconque revendication précédente, comprenant :

l'accouplement en rotation de l'anneau extérieur (224) et de l'anneau intérieur (234) ;
la rotation ensemble de l'anneau extérieur (224) et de l'anneau intérieur (234) dans une première direction par rapport au boîtier (202) de sorte qu'au moins l'un parmi l'anneau extérieur (224) et l'anneau intérieur (234) soit amené en butée axiale ou à proximité d'une butée axiale avec le composant (208) ;
la rotation ensemble de l'anneau extérieur (224) et de l'anneau intérieur (234) dans une seconde direction, opposée à la première direction, jusqu'à ce que les rainures de clavette dans chacun du boîtier (202), de l'anneau extérieur (224) et de l'anneau intérieur (234) soient alignées les unes avec les autres ;
le désaccouplement en rotation de l'anneau extérieur (224) par rapport à l'anneau intérieur (234) ;
l'accouplement en rotation de l'anneau intérieur (234) avec le boîtier (202) ;
la rotation de l'anneau extérieur (224) par rapport au boîtier (202) et à l'anneau intérieur (234) de sorte que l'anneau intérieur (234) soit amené en butée axiale avec le composant (208), et comprime celui-ci axialement.

10. Procédé selon la revendication 9, dans lequel le premier pas (P1) est plus fin que le second pas (P2) et, à l'étape de rotation de l'anneau extérieur (224) par rapport au boîtier (202) et à l'anneau intérieur (234), l'anneau extérieur (224) est tourné dans la seconde direction.

11. Procédé selon la revendication 9, dans lequel le premier pas (P1) est plus large que le second pas (P2), à l'étape de rotation de l'anneau extérieur (224) par rapport au boîtier (202) et à l'anneau intérieur (234), l'anneau extérieur (224) est tourné dans la première direction.

12. Système de précharge axiale d'un composant, comprenant :

un boîtier intérieur (502) ;
un composant (208) disposé radialement à l'extérieur du boîtier intérieur (502) ;
dans lequel le boîtier intérieur (502) comprend une surface circonférentielle extérieure filetée avec un premier pas de filetage (P1) ;
un anneau intérieur (524) disposé radialement vers l'extérieur du boîtier intérieur (502), comprenant une surface circonférentielle intérieure filetée avec un pas de filetage sensiblement égal au premier pas de filetage (P1) et une surface circonférentielle extérieure filetée avec un second pas de filetage (P2) ;
un anneau extérieur (534) disposé radialement vers l'extérieur de l'anneau intérieur (524), comprenant une surface circonférentielle intérieure filetée avec un pas de filetage sensiblement égal au second pas de filetage (P2) ;
dans lequel le boîtier intérieur (502) comprend un premier nombre (N1) de rainures de clavette disposées autour de sa circonférence ;
dans lequel l'anneau intérieur (524) comprend un deuxième nombre (N2) de rainures de clavette disposées autour de sa circonférence ;
dans lequel l'anneau extérieur (534) est muni d'un troisième nombre (N3) de rainures de clavette disposées autour de sa circonférence ;
dans lequel l'anneau intérieur (524) est configuré pour tourner par rapport au boîtier intérieur (502) afin de permettre l'alignement d'une rainure de clavette ménagée dans l'anneau intérieur (524) et d'une rainure de clavette dans le boîtier intérieur (502) ;
dans lequel l'anneau extérieur (534) est configuré pour tourner par rapport à l'anneau intérieur (524) afin de permettre l'alignement d'une rainure de clavette ménagée dans l'anneau extérieur (534) et d'une rainure de clavette dans l'anneau intérieur (524) ;

dans lequel l'anneau extérieur (534) est configuré pour être déplacé axialement en translation vers le composant (208) lors de la rotation de l'anneau intérieur (524) lorsque l'anneau extérieur (534) et le boîtier intérieur (502) sont bloqués en rotation l'un par rapport à l'autre.

13. Procédé de précharge d'un composant selon la revendication 12, comprenant :

l'accouplement en rotation de l'anneau intérieur (524) et de l'anneau extérieur (534) ;

la rotation ensemble de l'anneau intérieur (524) et de l'anneau extérieur (534) dans une première direction par rapport au boîtier intérieur (502) de sorte qu'au moins l'un parmi l'anneau intérieur (524) et l'anneau extérieur (534) soit amené en butée axiale ou à proximité d'une butée axiale avec le composant (208) ;

la rotation ensemble de l'anneau intérieur (524) et de l'anneau extérieur (534) dans une seconde direction, opposée à la première direction, jusqu'à ce que les rainures de clavette dans chacun du boîtier intérieur (502), de l'anneau intérieur (524) et de l'anneau extérieur (534) soient alignées les unes avec les autres ;

le désaccouplement en rotation de l'anneau intérieur (524) par rapport à l'anneau extérieur (534) ;

l'accouplement en rotation de l'anneau extérieur (534) avec le boîtier intérieur (502) ;

la rotation de l'anneau intérieur (524) par rapport au boîtier intérieur (502) et à l'anneau extérieur (534) de sorte que l'anneau extérieur (534) soit amené en butée axiale avec le composant (208), et comprime celui-ci axialement.

14. Procédé selon la revendication 13, dans lequel le premier pas (P1) est plus fin que le second pas (P2) et, à l'étape de rotation de l'anneau intérieur (524) par rapport au boîtier intérieur (502) et à l'anneau extérieur (534), l'anneau intérieur (524) est tourné dans la seconde direction.

15. Procédé selon la revendication 13, dans lequel le premier pas (P1) est plus large que le second pas (P2), à l'étape de rotation de l'anneau intérieur (524) par rapport au boîtier intérieur (502) et à l'anneau extérieur (534), l'anneau intérieur (524) est tourné dans la première direction.

Fig. 1A

(Prior Art)

Fig. 1B

Fig. 2A

Fig. 2B

Fig. 2C

Fig. 3A

Fig. 3B

Fig. 3C

- Rotation locked relative to one another

Fig. 4

Fig. 5A

208

P2

534

502

A

P1

524

Fig. 5B

N3

N1

N2

514

524

534

502

A

526

536

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010329776 A1